# EUROPEAN PATENT SPECIFICATION

(11) **EP 0 474 510 B1**
(45) Date of publication and mention of the grant of the patent: **23.08.1995**
(21) Application number: 91308179.0
(22) Date of filing: 06.09.1991
(51) Int. Cl.: B61D 17/04, B61D 17/08, B61D 17/10

(54) **Railway car body structures and methods of making them**
Eisenbahnpersonenwagenaufbauten und deren Produktionsmethoden
Superstructures de voitures de chemin de fer et leurs procédés de construction

(30) Priority: 07.09.1990 JP 235517/90
(43) Date of publication of application: 11.03.1992
(73) Proprietor: HITACHI, LTD., Chiyoda-ku, Tokyo 101 (JP)
(72) Inventor: Ohara, Mamoru, Kudamatsu-shi, Yamaguchi-ken (JP); Hattori, Morishige, Kudamatsu-shi, Yamaguchi-ken (JP); Okumotoe, Yoshinao, Kudamatsu-shi, Yamaguchi-ken (JP); Okazaki, Masato, Kudamatsu-shi, Yamaguchi-ken (JP); Takeichi, Michifumi, Kudamatsu-shi, Yamaguchi-ken (JP)
(74) Representative: Stoner, Gerard Patrick

(56) References cited:
- EP-A- 0 405 889
- RAILWAY GAZETTE INTERNATIONAL. vol. 135, no. 8, August 1979,LONDON GB page 751; AN.: 'light construction'

## Description

This invention relates to railway car body structures and methods of making them. More particularly, the present invention relates to railway car body structures and methods of making them, which will be suitable for a railway car body which runs at a high speed at which outdoor pressure changes potentially causing discomfort to passengers occur .

With an increase in a running speed of a railway car body structure, weight reduction of the body structure itself has been attempted. One of such proposals constitutes plate members and frame members that constitute the body structure by a light weight alloy such as an aluminum alloy. Or, plate members and frame members may be integrally formed to produce shaped members, which constitute the body structure. Such a body structure is described, for example, in "Light Metal Rolling stock Committee Report No. 3" (1974 - 1977, published by Japan Association of Rolling Stock Industries Corporation), pp. 90 - 72.

An example of a railway car using an aluminum honeycomb sandwich panel for floor plates so as to reduce the weight of a car body is described in Japanese Utility Model Laid-Open No. 183007/1979 and No. 179569/1985 and Japanese Patent Laid-Open No. 193760/1990. The aluminum honeycomb sandwich panel is produced by superposing surface materials and core materials of an aluminum alloy and bonding them together by a resin bonding material.

An example of a railway car using the honeycomb panel for the plate members for constituting the roof or the floor is described in EP 0354436 Al and FR 2635064 Al. However, these reference do not explain in detail by which means bonding of the honeycomb panel and the frame member or mutual bonding of the frame members is effected in these railway car bodies. Only one explanation given thereby is to the effect that the honeycomb panel and the frame member are joined by rivets.

Recently, attempts have been made to improve the running speed of railway cars and with the improvement in the running speed, the increase in vibration and noise and the increase in power consumption have become critical problems. As to the railway car itself, variations in pressure acting on the surface of its body structure become greater with the increase in the running speed. Particularly, variations in the external pressure on the car body structure becomes great when railway cars grass each other inside a tunnel. Therefore, the pressure resistance of the railway car body structure must be improved with the improvement in the running speed.

To solve the problems described above, both the improvement in the pressure resistance and reduction of the weight of the railway car body structure must be accomplished. The conventional railway car body structure uses the shaped members of a light weight alloy as already described but there is a limit to the present technique in further reducing their thickness. It is therefore expected that in the body structure using the shaped members, the body structure has stiffness above a necessary level and its overall weight becomes great.

In the body structure using the honeycomb panels, on the other hand, there is the problem that a long time and a great deal of labor are necessary for producing the body structure because welding is not used for joining the panels and the frame members. In other words, when the resin bonding material is used, its application operation is complicated and a long time is necessary for its solidification. There is another problem that strength does not become uniform. When the rivets, bolts and nuts are used, machining of rough-holes is necessary and automation of the joining operation is difficult.

The conventional railway car body structure does not much consider the disadvantages that occur when the sheet thickness of the surface materials constituting the honeycomb panel is reduced. In other words, if the thickness of the surface material is reduced, the damage is likely to occur to the surface material due to contact with others at the time of handling of the honeycomb panel. Particularly when the surface material is composed of an aluminum alloy, disadvantage such as holes made by the contact with a tool, etc, is likely to occur. Such a disadvantage has a high possibility of occurrence even after the body structure is completed, too. When a stone or an article having a pointed tip hits the surface of the car body completed as a railway car body, the surface is likely to be broken relatively easily.

When the body structure is composed of the honeycomb panels, we perceive a potential problem in that when a pressure variation outside the car body acts or when the weights of passengers, mounted appliances and the body structure itself act on the body structure, unevenness reflecting the shape of the core material occurs on the surface of the surface materials.

Generally, we perceive that it would be desirable to provide a railway car body structure which is light in weight and has high pressure resistance and strength.

It would also be preferred to provide a production method of a railway car body structure which is efficient at the time of production.

Our EP-A-405889 (which in Article 54(3) EPC relation with the present case) describes railway car body panel assemblies, each panel having similar inner and outer spaced metal sheets on the inner and outer faces of a cellular metal core which is bonded to the sheets. An elongate connecting member of thicker metal is attached along the edge of each panel by continuous metal-to-metal bonding, and one panel is joined to the next by welding their two connecting members together at lateral projections thereof.

In one aspect we now provide a railway car body structure which comprises an underframe, two side constructions, a roof construction and two end constructions, wherein at least one of the structural members constituting the constructions described above includes plate members each being formed by joining two surface materials, a core material and binding materials through metal-to-metal bonding, and the thickness of one of the two surface materials of the plate member on an outdoor side of the car body is greater than the thickness of the other surface material on an indoor side.

In another aspect we provide a production method for making a railway car body structure having an underframe, side wall constructions, a roof construction and end constructions, in which structural members for at least one of said constructions are made by
providing a plurality of panels, each panel having metal core material sandwiched and brazed between metal inner and outer surface sheets, and an elongate peripheral metal joining element sandwiched between the inner and outer surface sheets along the edge of the panel, the joining element having an outwardly-open channel section whereof a base spans between the inner and outer surface sheets and inner and outer limbs have peripherally-directed exposed welding edges for welding to corresponding edges of an adjacent panel, the inner and outer surface sheets being brazed to the inner and outer limbs respectively and overlapping the limbs to the welding edges thereof;
juxtaposing a plurality of said panels and welding together the welding edges of their joining elements to form a panel unit (X,Y), and
forming the structural members by juxtaposing and joining a plurality of the panel units (X,Y).

### BRIEF DESCRIPTION OF THE DRAWINGS

Fig. 1 is a perspective view showing a railway car body structure in accordance with a first embodiment of the present invention;
Fig. 2 is a perspective view showing the body structure of Fig. 1 as a whole;
Fig. 3 is a sectional view taken along arrow 3 - 3 of Fig. 2;
Fig. 4 is a sectional view taken along arrow 4 - 4 of Fig. 2;
Fig. 5 is a sectional view taken along arrow 5 - 5 of Fig. 2;
Fig. 6 is a perspective view showing a railway car body structure in accordance with a second embodiment of the present invention; and
Figs. 7 and 8 are sectional views showing the sectional shapes of a side post and a carline, respectively.

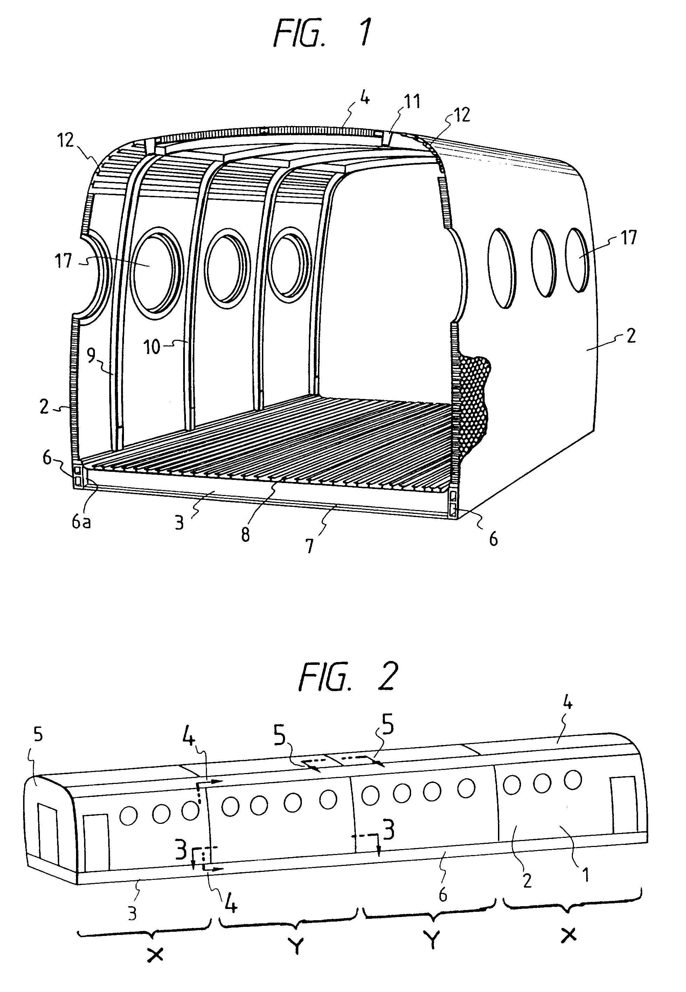

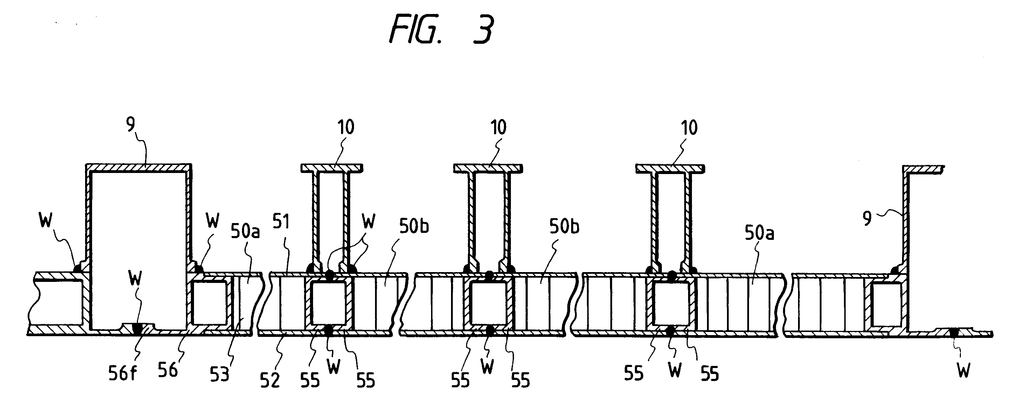

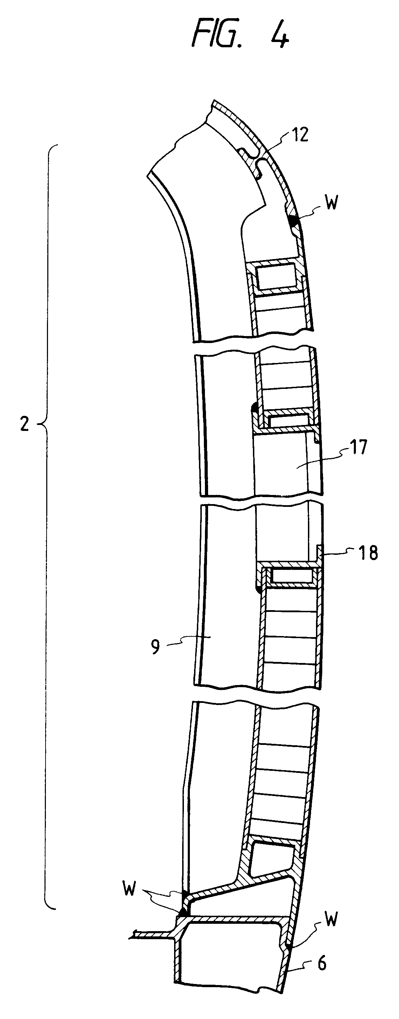

A first embodiment of the present invention will be explained with reference to Figs. 1 to 5.

Reference numeral 1 represents a body structure of a railway car and reference numeral 2 does a side construction forming the side surface portions of the body structure 1. Reference numeral 3 represents an underframe forming the bottom surface portion of the body structure 1 and reference numeral 4 does a roof construction forming the upper surface portion of the body structure 1. Reference numeral 5 represents an end construction forming the end surface portion of the body structure in its longitudinal direction. The body structure 1 comprises two side constructions, one underframe 3, one roof construction 4 and two end constructions 5. Reference numeral 6 represents a side sill forming the underframe 3, and the side sills 6 are disposed on both sides of the underframe 3 in the transverse direction of the car body in such a manner as to extend in the longitudinal direction of the car body. Reference numeral 7 represents cross beams disposed between the side sills 6 on both sides of the underframe 3 in the transverse direction of the car body, and they are disposed at right angles to the side sills 6. The end portions of the cross beams 7 in the longitudinal direction, which are disposed between the side sills 6, are coupled to the side surfaces 6a of the side sills 6, respectively. These cross beams 7 are juxtaposed with predetermined spacings between them in the longitudinal direction of the car body. Reference numeral 8 represents floor plates which are disposed on the cross beams 7. A plurality of shaped members made of a light weight alloy, which are adapted to extend in the longitudinal direction of the car body, are used as the floor plates 8. Each shaped member forming the floor plate 8 ribs having a T-shaped sectional shape on the indoor side, and the ribs are formed integrally with the shaped member. The floor plates 8 are disposed in such a manner as to define a flat surface in the transverse direction of the car body. They may be disposed in such a manner as to define an arcuate curved plane in the transverse direction of the car body, as well. If the floor plates are disposed so as to form the curved plane, they are effective against variations in an external pressure of the car body and the sheet thickness can be reduced.

The side construction 2 described above is shaped by joining a plurality of blocks in the longitudinal direction of the car body. In other words, the side construction 2 comprises two blocks X forming the portion near a truck disposition position and two blocks Y forming the portion spaced apart from the truck disposition position. The blocks X and Y consist of plate members 50a and 50b and are equipped with side posts 9 and 10. One of the ends of each side post 9, 10 is joined to the side sill 6 and the other end, to a later-appearing cantrail 11. The side post 9 is composed of a shaped member having a U-shaped sectional shape. The side post 9 is joined to the joint portion of each block. The side post 10 is composed of a shaped member having a II-shaped sectional shape, and is fitted to an intermediate portion of each block in the longitudinal direction of the car body. The side posts 9 and 10 are constituted so that their sectional shapes are linearly symmetric with respect to the center line in a direction orthogonal to the joint surface. A side window opening 17 is formed in side plate members 50a, 50b. Shaped members each having a flange 18 for supporting window glass are disposed around the edge of the side window opening 17. Symbol W in the drawings represents a weld portion.

Each side plate member 50a, 50b is produced by joining surface materials 51, 52, a core material 53 and binding materials 55, 56 by brazing. Each surface material 51, 52 is composed of a thin sheet material made of an aluminum alloy. The core material 53 is produced by bonding two ribbon-like thin sheet materials of an aluminum alloy in a honeycomb shape. The sheet material may have a rectangular, triangular or other shape besides the honeycomb shape. In the following description, however, the core material shaped in the honeycomb shape will be explained by way of example. The binding material 55 is composed of a shaped member of an aluminum alloy having a U-shaped sectional shape. The width of this binding material 55 is equal to the thickness of the core material 53. The binding material 56 is composed of a shaped member of an aluminum alloy having a box-shaped sectional shape one of the sides of which projects in a flange shape. The binding material 56 has a portion whose width is equal to the thickness of the core material 53 and this portion is inserted between the surface materials 51 and 52. The flange 56f of the binding material 56 is constituted so as to define a surface which is continuous to the surface material 52 which defines the outer surface of the body structure 1.

The side plate member 50a, which is disposed at the end portions of the blocks X, Y in the longitudinal direction of the car body comprises the core material 53 and the binding materials 55, 56 between the surface materials 51 and 52 described above. The side plate member 50b which is disposed at an intermediate position of the block X, Y in the longitudinal direction of the car body comprises the core material 53 and a plurality of binding materials 55 between the surface materials 51 and 52. Each side plate member 50a, 50b is produced by disposing the binding materials 55, 56 on the outer periphery of the core material 53 and brazing them while they are sandwiched between the surface materials 51 and 52.

Each binding material is produced by heating the surface materials while a load is being applied to the surface materials inside a vacuum furnace. The side plate member 50a, 50b has a length of about 2 m, a width of about 0.5 to about 1 m and a thickness of about 30 mm, for example. The binding material 56 is disposed at the outer peripheral portion of each block X, Y and its flange 56f projects from the block.

Each block X, Y is produced by disposing the side plate members 50a at the end portions in the longitudinal direction of the car body, disposing a plurality of side plate members 50b between the side plate members 50a and joining these side plate members with one another by welding their respective binding materials 55. The side post 10 described already is fitted to the joint portion between the side plate member 50a and the side plate member 50b and to the joint portion between the side plate members 50b and 50b by welding, on the internal side of the car body.

The side post 10 is joined to the surface of the surface material 51 in such a manner as to correspond to two adjacent binding materials 55, 55 of the bonded side plate members 50b. The side post 9 is fitted to the joint portion between the blocks X and Y and to the joint portion between the blocks Y, by welding. The side post 10 is joined to two adjacent binding materials 56, 56 of the joined side plate members 50a. When the side posts 9 and 10 are joined to the side plate members 50a, 50b, they constitute the box-shaped sectional shape. A shaped member having a different sectional shape from those of the side posts 9, 10 may be used as the side post described above.

Three kinds of surface materials 51, 52 having sheet thickness of 0.6 mm, 0.8 mm and 1.0 mm are prepared as the surface materials 51, 52 described above. As the surface material 52 for the side plate members 50a, 50b constituting the block X on the outdoor side of the car body, the surface material 52 having a sheet thickness of 1.0 mm is used. As the surface material 51 for the side plate members 50a, 50b constituting the block X on the indoor side of the car body, the surface material 51 having a sheet thickness of 0.8 mm is used. As the surface material 52 for the side plate members 50a, 50b constituting the block Y on the outdoor side of the car body, the surface material 52 having a sheet thickness of 0.8 mm is used. As the surface material 51 for the side plate members 50a, 50b constituting the block Y on the indoor side of the car body, the surface material 51 having a sheet thickness of 0.6 mm is used. Accordingly, the honeycomb panel which constitutes the side construction 2 and comprises the side plate members 50a, 50b has the surface material 52, disposed on the outdoor side of the car body, which has a greater sheet thickness than that of the opposing surface material 51 disposed on the indoor side of the car body. In the blocks X and Y described above, the surface material constituting the block X has a greater sheet thickness than that of the surface material constituting the block Y. The core material 53 constituting the side plate members 50a, 50b comprises a 0.2 mm-thick sheet.

Several kinds of side plate members 50a, 50b are produced with their widths ranging from 0.5 m to 1 m. The side construction 2 is produced by disposing the side plate members having progressively greater widths as the side plate members are gradually away from the truck disposition position. Accordingly, the side plate members constituting the block X have smaller widths while the side plate members constituting the block Y have greater widths. The spacings between the side posts 9 and 10 become progressively greater as they are spaced apart progressively from the truck disposition position in conformity with the widths of the side plate members 50a and 50b. However, the spacings between the side posts 9, 10 are often changed in accordance with the specification of a passenger room. Accordingly, there often occurs the case where the side posts cannot be disposed in agreement with the joint portions of the side plate members. In such a case, the side plate members are produced by disposing the shaped members having the box-shaped sectional shape between the surface materials in such a manner as to correspond to the positions of disposition of the side posts. The side posts are bonded by welding to the surface of the surface materials in such a manner as to correspond to the positions of disposition of the shaped members having the box-shaped sectional shape described above.

Binding materials having the same sectional shape as that of the binding material 56 described above are fitted to the upper end portion of each block X, Y in the transverse direction, that is, to the side end portions of a roof construction. Each frieze board 12, which is composed of a shaped member of an aluminum alloy and is extended across the full length of the body structure in the longitudinal direction of the car body, is welded to the binding materials at the upper end of each block X, Y in the transverse direction. The frieze board 12 comprises a flat sheet portion shaped in an arc, a T-shaped rib formed integrally with the flat sheet portion at its car body indoor side and an L-shaped flange bonded to the roof construction 4. The L-shaped flange of the frieze board 12 is joined by welding to a cantrail 11 constituting the roof construction 4 which will be later described. When the L-shaped flange of the frieze board 12 and the cantrail 11 are joined, they constitute a beam forming the box-shaped section extending in the longitudinal direction of the car body.

A shaped member of an aluminum alloy corresponding to a rocker rail is fitted to the lower end portion of each block X, Y in the transverse direction, that is, to its end portion on the underframe side. The rocker rail has the same length as that of each block X, Y in the longitudinal direction of the car body. When the side construction 2 is constituted by joining each block X, Y, the rocker rail of each block is bonded at its end portion by welding.

The roof construction 4 is constituted by joining a plurality of blocks in the longitudinal direction of the car body in the same way as the side construction 2. Each block constituting the roof construction 4 comprises a plurality of roof plate members 60a, 60b in the same way as the side construction 2. Each roof plate member 60a, 60b comprises surface materials 61, 62, a core material 63 and binding materials 65, 66. The roof plate member 60a is disposed at the end portion of the block in the longitudinal direction of the car body. The roof plate member 60b is disposed at an intermediate portion of the block. The roof plate member 60a is constituted by disposing the binding material 65, 66 around the outer periphery of the core material 63, interposing them by the surface materials 61, 62 and brazing them together. The roof plate member 60b is constituted by disposing the binding materials 65 around the outer periphery of the core material 63, interposing them by the surface materials 61, 62 and brazing them together. The block described above is constituted by combining the roof plate members 60a with 60b and welding them together.

A carline 19 is disposed at each joint portion of the blocks. A carline 20 is disposed at each joint portion of the roof plates inside each block. The carline 19 has the same sectional shape as that of the side post 9. The sectional shape of the carline 20 is the same as that of the side post 10. The roof plate members 60a and 60b have a length and a width of about 1 m and a thickness of 30 mm. The block is constituted by disposing one or two roof plate members 60b between two roof plate members 60a and 60a, juxtaposing two rows of this combination and joining them together. The surface material 62 disposed on the outdoor side of the car body has a thickness of 1 mm and the surface material 61 disposed on the indoor side of the car body has a thickness of 0.8 mm. The core material 63 is 0.2 mm thick. The honeycomb panel that constitutes the roof construction 4 and comprises the roof plate members 60a and 60b has fundamentally the same construction as that of the honeycomb panel constituting the side construction 2 described above.

The end construction 5 is constituted by combining honeycomb panels of an aluminum alloy and joining them by welding in the same way as the side construction 2 and the roof construction 4. Of the two surface materials constituting the honeycomb panel, the surface material on the outdoor side of the car body is thicker than the surface material on the indoor side.

When a large number of electric appliances or other devices are fitted to the end construction, the end construction may be constituted by shaped members of a light weight alloy.

The production process of the body structure 1 will be explained. To begin with, the underframe 3 is constituted by disposing a plurality of cross beams 7 between the two side sills 6, welding them together, placing the floor members 8 on the upper surface of the cross beams 7 and joining them together by welding.

The side construction 2 is produced on a jig having the shape in conformity with the shape of the external surface of the side construction 2. First of all, the side plate members 50a, 50b as the honeycomb panel are produced in the vacuum furnace as already described. These side plate members 50a, 50b are combined in accordance with the specification of the blocks X, Y and are joined by welding. Each block X, Y is constituted by disposing the side plate members 50a at both ends in the longitudinal direction of the car body, disposing the side plate members 50b between the side plate members 50a, and welding and joining their respective binding materials 55. Each binding material at the end portion of each block X, Y in the transverse direction is also joined by welding, and the rocker rail described above is also fitted by welding. Two blocks Y are disposed between two blocks X and are then placed on the jig. While each block is kept restricted, the flanges 56f of the adjacent binding materials 56 are joined by welding. The binding material at each end of each block in the transverse direction as well as each rocker rail are welded. Next, each frieze board 12 is placed at the upper end portion of each block X, Y in the transverse direction. The side posts 9, 10 are then placed on the binding materials 55, 56 of the blocks X, Y. Thereafter, while the side posts 9, 10, the frieze board 12 and the blocks X, Y are kept restricted, the side posts 9, 10 and the frieze board 12 are fitted to the blocks X, Y by welding. In this manner, the side construction 2 is completed.

The roof construction 4 is produced on a jig having a shape which is in conformity with the outer surface of the roof construction 4. The roof plate members 60a, 60b as the honeycomb panel are produced in the vacuum furnace in the same way as the side plate members. These roof plate members 60a, 60b are combined in accordance with the specification of each block and joined by welding. The cantrails 11 are fitted to both ends of each block in the transverse direction by welding. The length of each cantrail 11 is in conformity with the length of the block in the longitudinal direction of the car body. A plurality of blocks constituted in this manner are joined by welding while they are placed on the jig and kept restricted. Joint of the blocks is achieved by welding the flanges of the binding materials 66 of each block. The cantrails 11, too, of each block is joined by welding. The carlines 19, 20 are placed on a plurality of blocks thus joined. While the carlines 19, 20 and each block are kept restricted, the carlines 19, 20 are fitted to the binding materials 65, 66 of each block and to the cantrails 11. In this way, the roof construction 4 is completed.

The end construction 5, is also produced on a jig in the same way as the side construction 2 or the roof construction 4.

The underframe 3, the two side constructions 2, the roof construction 4 and the two end constructions 5 each constituted in the manner described above are then assembled. Two side constructions 2 and two end constructions 5 are disposed on the underframe 3 and after positioning is completed, they are joined by welding. The roof construction 4 is then placed on the two side constructions 2 and the two end constructions 5 and after positioning is completed, they are joined by welding.

In accordance with the construction described above, the surface materials 52, 56 of the honeycomb panels constituting the body structure 1 on the outdoor side are thicker than the surface materials, for example, 51 and 61, on the indoor side. Therefore, pressure resistance can be improved and reduction of the weight can be achieved. In other words, the drop of stiffness is prevented by the structure of the honeycomb panel itself, and reduction of the weight can be accomplished by setting the sheet thickness of the surface materials on the indoor side and on the outdoor side as described above. Since a certain sheet thickness is secured for the surface materials of the honeycomb panel constituting the body structure 1 on the outdoor side, surface corrugation of the body structure 1 can be reduced. Accordingly, the quantity of a putty applied onto the surface of the body structure 1 for smoothing the surface of the body structure 1 can be reduced and eventually, the weight of the railway car can be reduced.

Since a certain sheet thickness is secured for the surface materials of the honeycomb panel constituting the body structure 1 on the outdoor side, damage to one of the surfaces of the honeycomb panel due to impingement with others during transportation of the honeycomb panel, etc, can be prevented. Accordingly, even when the honeycomb panel is produced with the lowest possible weight, its handling is relatively easy, so that the working efficiency during the production of the body structure 1 can be improved.

The side construction 2 is constituted by the side plate members 50a, 50b consisting of the honeycomb panel. For this reason, sufficient stiffness can be secured against variations in pressure outside the car body. In other words, the honeycomb panel is produced by disposing the core material between the two surface materials and joining them together. Therefore, the honeycomb panel has high stiffness against in-plane and out-plane loads due to its own structure. Since the side construction 2 is composed by the side plate members 50a, 50b consisting of the honeycomb panels having such features, in-plane and out-plane stiffness of the side construction can be improved. This is effective for improving pressure resistance of the side construction 2 and for reducing its weight. Since the honeycomb panel constituting the side plate members 50a, 50b is produced by brazing and joining the surface materials, the core materials and the binding materials, it exhibits a smaller change with time in comparison with bonding by a resin bonding material of the prior art technique and has higher reliability.

Since the side plate members 50a, 50b can be made relatively thinner than the shaped member used conventionally, the side construction 2 can be made lighter in weight. The conventional honeycomb panel using a resin bonding material for a railway car uses the resin bonding material or rivets for joining the honeycomb panels with one another or joining the honeycomb materials with the shaped members. Therefore, the overlap portion of the joint portion becomes thick. Accordingly, sufficient reduction of the weight cannot be expected of the honeycomb panel using the resin bonding material. Furthermore, it is difficult by this honeycomb panel to make the surface of the side construction flat. Since the side plate members 50a, 50b described above are joined by welding, there is no overlap portion at the joint portion, and hence reduction of the weight can be achieved. Since the side plate members 50a, 50b are joined by welding, the joining work can be completed within a short time. The surface of the joint portion by welding can be easily finished to a smooth surface by a grinder.

The side construction 2 comprises the block X whose surface materials 51, 52 are thick and the block Y whose surface materials 51, 52 are thin. Therefore, the block X of the side construction 2 which is close to the truck disposition position has higher stiffness than the block Y spaced apart from the truck disposition portion. The shearing stress and bending moment acting on the side construction are the highest at the portion near the truck disposition position and decrease progressively at portions progressively spaced apart from the truck disposition position. Since the side construction 2 is constituted in such a manner as to cope with these shearing stress and bending moment, the weight can be reduced while securing strength. The side posts 9, 10 constituting the side construction 2 are disposed with gradually smaller spacings between them toward the truck disposition position in the longitudinal direction of the car body. Since the side posts 9, 10 are disposed in this manner, the weight can be reduced while securing the strength of the side construction 2.

Shaped members having a box-shaped sectional shape can be disposed in advance inside the honeycomb panel in conformity with the positions of disposition of the side posts 9, 10 described above. If the side posts 9, 10 are disposed at the disposition positions the shaped members, the positions of disposition of the side posts 9, 10 can be determined arbitrarily. If the honeycomb panel is constituted in this way, the side posts 9, 10 can be disposed at arbitrary positions and stiffness of the side construction 2 can be easily varied in accordance with the specification required for the railway car body.

The blocks X and Y are joined by welding the flanges 56f of the butted binding materials 56. Therefore, each block X, Y can be joined by the welding operation from only one side on the indoor side. The flanges 56f described above are constituted so that their surfaces define the surface of the side construction. Therefore, the surface of the side construction can be easily made smooth by merely finishing the surface of the joint portions of the blocks X, Y by a grinder.

If the binding elements 56 are disposed along the entire periphery of each side plate member, joint of all the side plate members can be made by the welding operation from only one side as described above. This means that a plurality of outer side plate members need not be turned inside out when they are joined, and the joining operation can therefore be simplified.

To produce the side plate members 50a, 50b with the smallest weight, the following construction may be employed. Each side plate member is divided into upper and lower two parts, that is, the upper part forming the side window opening 17 and the lower part covering the other portions. The thickness of the surface materials of the lower part, that is, the surface materials of both outdoor and indoor sides, for example, are set to 0.6 mm. In this way, the side plate members 50a, 50b can be produced with the smallest weight.

A second embodiment of the present invention will be explained with reference to Fig. 6, wherein like reference numerals are used to identify like constituents as in the first embodiment. The characterizing feature of the second embodiment resides in that the floor plates disposed on the underframe in the first embodiment are composed of honeycomb panels. Therefore, the construction of the second embodiment other than the floor plates is the same as that of the first embodiment. Reference numeral 70 represents the floor plates that are disposed on the upper surface of the cross beams 7s constituting the underframe 3. The floor plate 70 comprises the surface materials 71, 72, the core material 73 sandwiched between the surface materials and two kinds of binding materials. The surface material 72 is disposed on the outdoor side of the car body and is thicker than the surface material 71. Incidentally, the surface material 71 is 0.8 mm thick and the surface material 72 is 1 mm thick. The height of the cross beams 7s is smaller than that of the cross beams in the first embodiment. The definite structure of the floor plate 70 is substantially the same as that of the side plate. Therefore, when the two kinds of binding materials described above are combined, two kinds of honeycomb panels can be formed. The block for constituting the floor plate is produced by combining the two kinds of honeycomb panels. A plurality of blocks described above are joined to constitute the floor plate 70.

According to the construction described above the floor plate 70 can be composed of the honeycomb panels whose surface material 72 on the outdoor side is made thick and consequently, the pressure resistance of the underframe 3 can be improved. The underframe 3 can be made light in weight, as well. Since the surface material 72 on the outdoor side is thick, the joining operation of the floor plate 70 with the cross beams 7s can be simplified. Since the floor plate 70 has higher out-plane stiffness than the floor plate of the first embodiment, the height of the cross beams 7s can be reduced. Accordingly, the overall height of the underframe 3 can be reduced and hence, larger space inside the passenger room or larger space beneath the floor plate in which various appliances are fitted can be attained.

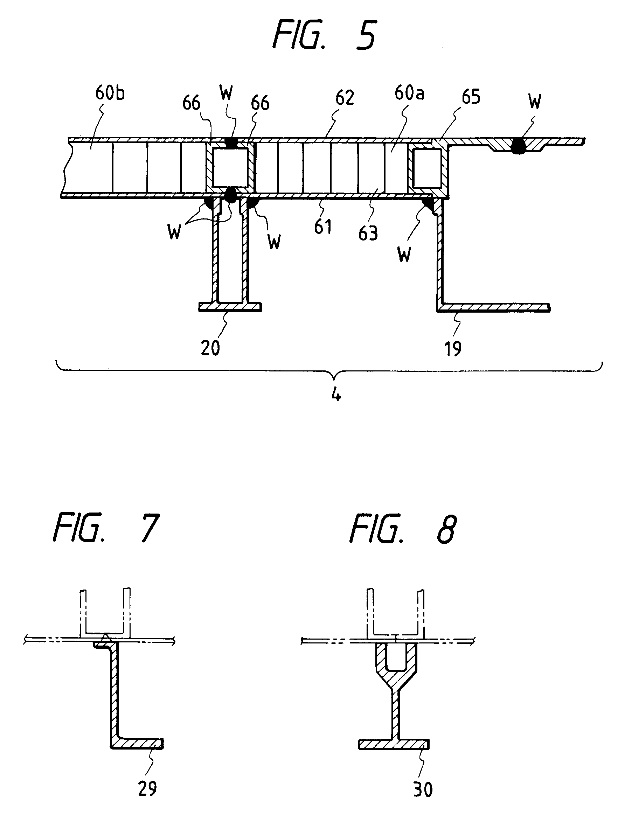

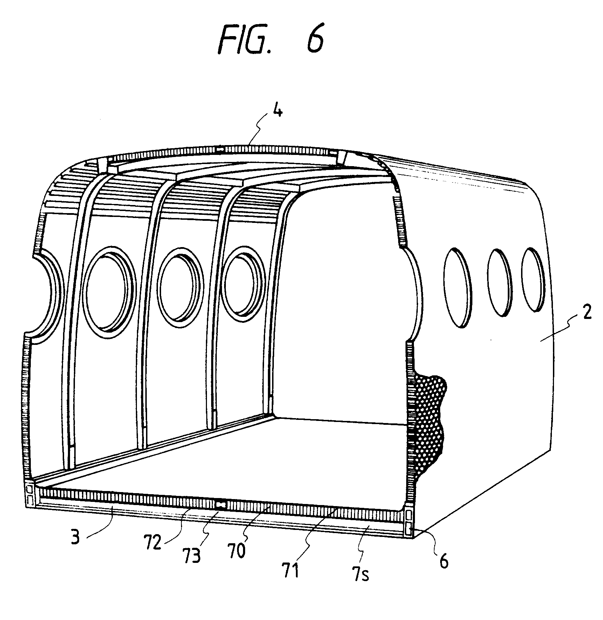

In the embodiments described above, the side posts 9, 10 are composed of the shaped members having the U-shaped and II-shaped sectional shapes, but a shaped member 29 having a Z-shaped sectional shape such as shown in Fig. 7 can be used for the side posts. If two of these members 29 are arranged to face each other and joined, a similar shape to that of the afore-mentioned side sill 9 having the U-shaped sectional shape can be obtained. The shaped member 29 having the Z-shape may be used singly as the side post. If various side posts are constituted by the shaped members having the Z-shaped sectional shape, the members can be used in common and the production cost can be reduced.

Furthermore, a shaped member 30 having a Y-shape such as shown in Fig. 8 can be used for the side post. Since the sectional shape of this shaped member 30 is axially symmetric, it has higher stiffness than the Z-shaped shaped member 29 described above. Since a groove is defined at the tip portion of the joint portion, joint can be effected while bridging over a weld bead of the joint portion of the plate members.

## Claims

1. A railway car body structure (1) comprising an underframe (3), two side constructions (2), a roof construction (4) and two end constructions (5), wherein at least one of the structural members constituting said body structure (1) has plate members (50a, 50b, 60a, 60b) each formed by joining two surface materials (51, 52, 61, 62), a core material (53,63) and binding materials (55, 56, 65, 66) through metal-to-metal bonding, and one (52, 62) of the two surface materials (51, 52, 61, 62) of said plate member (50a, 50b, 60a, 60b) on an outdoor side is thicker than the other (51, 61) of said surface materials on an indoor side.

2. A railway car body structure (1) according to claim 1, wherein said plate member (50a, 50b, 60a, 60b) is constituted to have a width obtained by dividing said structural member into a plurality of units in the longitudinal direction of said structural member, and a plurality of said plate members (50a, 50b, 60a, 60b) are juxtaposed and said binding materials (55, 56, 65, 66) thereof are joined by welding to constitute said structural member.

3. A railway car body structure (1) according to claim 2, wherein a frame member (9, 10, 19, 20) is disposed on the surface of said plate member on the indoor side at the joint portion of said plate members (50a, 50b, 60a, 60b).

4. A structure according to any one of the preceding claims, wherein said two side constructions (2) comprise said plate members (50a, 50b), each of said plate members (50a, 50b) constituting said side constructions (2) is constituted to have a width obtained by dividing said side construction (2) in the longitudinal direction of said car body, said plate members (50a, 50b) are juxtaposed and said binding materials (55, 56) thereof are joined by welding to constitute said side construction (2), and the thickness of said surface material of each of said plate members (50a, 50b) constituting said side construction is smaller at a position spaced apart from a truck disposition position than that of said surface material of said plate member near the truck disposition position of said side construction.

5. A railway car body structure according to claim 4, wherein side posts (9, 10) are disposed on the surface of each of said plate members (50a, 50b) on the indoor side at the joint portion of said plate members (50a, 50b).

6. A structure according to any one of the preceding claims, wherein said roof construction (4) comprises said plate members (60a, 60b), said plate members (60a, 60b) constituting said roof construction (4) are constituted to have a width obtained by dividing said roof construction (4) into a plurality of units in the longitudinal direction of said car body, said plate members (60a, 60b) are juxtaposed and said binding materials (65, 66) thereof are joined by welding to constitute said roof construction (4), and carlines (19, 20) are disposed in such a manner as to correspond to said binding materials (65, 66) at the joint portions of said plate members (60a, 60b).

7. A structure according to any one of the preceding claims, wherein said underframe (3) includes floor plates (70) constituted by said plate members, said plate members constituting said floor plate (70) are constituted to have a width obtained by dividing said side construction into a plurality of units in the longitudinal direction of said car body, said plate members are juxtaposed and said binding materials thereof are joined by welding to constitute said floor plate (7), said floor plates (70) are disposed on cross beams and said surface materials (72) having a large sheet thickness are joined to said cross beams (7s) by welding.

8. A railway car body structure according to any one of the preceding claims in which the binding materials comprise elongate box-section or channel-section elements (55,56;65,66) which extend along peripheries of said plate members between the surface materials (51,52;61,62) thereof and support the surface materials from inside.

9. A railway car body structure according to claim 8 in which the channel-section elements (55,66) open outwardly at the edges of the plate members, to oppose and be welded to corresponding open channel-section elements on neighboring plate members.

10. A railway car body structure according to claim 8 or claim 9, in which elongate frame members are disposed on the inward side of the plate members and extend in register with the elongate box - or channel-section binding members.

11. A method of making a railway car body structure having an underframe (3), side wall constructions (2), a roof construction (4) and end constructions (5), in which structural members for at least one of said constructions are made by
providing a plurality of panels (50a,b), each panel having metal core material (53,63) sandwiched and brazed between metal inner and outer surface sheets (51,52;61,62), and an elongate peripheral metal joining element (55,66) sandwiched between the inner and outer surface sheets (51,52;61,62) along the edge of the panel (50a,b), the joining element (55,66) having an outwardly-open channel section whereof a base spans between the inner and outer surface sheets (51,52;61,62) and inner and outer limbs have peripherally-directed exposed welding edges for welding to corresponding edges of an adjacent panel, the inner and outer surface sheets (51,52;61,62) being brazed to the inner and outer limbs respectively and overlapping the limbs to the welding edges thereof;
juxtaposing a plurality of said panels (50a,b) and welding together the welding edges of their joining elements to form a panel unit (X,Y), and
forming the structural members by juxtaposing and joining a plurality of the panel units (X,Y).

## Patentansprüche

1. Eisenbahnpersonenwagenaufbau (1) mit einem Unterrahmen (3), zwei Seitenkonstruktionen (2), einer Dachkonstruktion (4) und zwei Abschlußkonstruktionen (5), wobei mindestens eines der den Aufbau (1) bildenden Bauteile plattenförmige Teile (50a, 50b, 60a, 60b) aufweist, die jeweils dadurch hergestellt werden, daß zwei Oberflächenmaterialien (51, 52, 61, 62), ein Kernmaterial (53, 63) und ein Verbindungsmaterial (55, 56, 65, 66) über ein Metall-Metall-Verbindungsverfahren zusammengefügt werden, wobei eines (52, 62) der zwei Oberflächenmaterialien (51, 52, 61, 62) des plattenförmigen Teils (50a, 50b, 60a, 60b), das auf der Außenseite liegt, dicker als das andere (51, 61) der Oberflächenmaterialien ist, das auf der Innenseite liegt.

2. Eisenbahnpersonenwagenaufbau (1) nach Anspruch 1, bei dem das plattenförmige Teil (50a, 50b, 60a, 60b) so ausgebildet ist, daß es eine Breite aufweist, die dadurch erhalten wird, daß das Bauteil in seiner Längsrichtung in mehrere Einheiten unterteilt wird, und wobei mehrere der plattenförmigen Teile (50a, 50b, 60a, 60b) nebeneinandergesetzt werden und ihre Verbindungsmaterialien (55, 56, 65, 66) durch Schweißen miteinander verbunden werden, um das Bauteil zu bilden.

3. Eisenbahnpersonenwagenaufbau (1) nach Anspruch 2, bei dem ein Rahmenteil (9, 10, 19, 20) an der Oberfläche des plattenförmigen Teils auf der Innenseite am Verbindungsbereich der plattenförmigen Teile (50a, 50b, 60a, 60b) angeordnet ist.

4. Aufbau nach einem der vorstehenden Ansprüche, bei dem die zwei Seitenkonstruktionen (2) die plattenförmigen Teile (50a, 50b) aufweisen, wobei jedes der plattenförmigen Teile (50a, 50b), die die Seitenkonstruktionen (2) bilden, so ausgebildet ist, daß es eine Breite aufweist, die dadurch erhalten wird, daß die Seitenkonstruktion (2) in Längsrichtung des Personenwagenaufbaus unterteilt wird, wobei die plattenförmigen Teile (50a, 50b) nebeneinandergesetzt werden und ihre Verbindungsmaterialien (55, 56) durch Schweißen miteinander verbunden werden, um die genannte Seitenkonstruktion (2) zu bilden, und wobei die Dicke des Oberflächenmaterials jedes der plattenförmigen Teile (50a, 50b), die die Seitenkonstruktion bilden, an einer Position, die von einer Rollschemel-Anordnungsposition beabstandet ist, dünner ist als die des Oberflächenmaterials eines plattenförmigen Teils der Seitenkonstruktion nahe einer Rollschemel-Anordnungsposition.

5. Eisenbahnpersonenwagenaufbau nach Anspruch 4, bei dem im Verbindungsbereich der plattenförmigen Teile (50a, 50b) Seitenstützen (9, 10) an der Oberfläche jedes dieser plattenförmigen Teile (50a, 50b) an der Innenseite angeordnet sind.

6. Aufbau nach einem der vorstehenden Ansprüche, bei dem die Dachkonstruktion (4) die plattenförmigen Teile (60a, 60b) aufweist, wobei diese die Dachkonstruktion (4) bildenden plattenförmigen Teile (60a, 60b) so ausgebildet sind, daß sie eine Breite aufweisen, die dadurch erhalten wird, daß die Dachkonstruktion (4) in Längsrichtung des Personenwagenaufbaus in mehrere Einheiten unterteilt wird, wobei die plattenförmigen Teile (60a, 60b) nebeneinandergesetzt werden und ihre Verbindungsmaterialien (65, 66) durch Schweißen miteinander verbunden werden, um die Dachkonstruktion (4) aufzubauen, und wobei Wagenauskleidungen (19, 20) auf solche Weise angeordnet sind, daß sie den Verbindungsmaterialien (65, 66) an den Verbindungsbereichen der plattenförmigen Teile (60a, 60b) entsprechen.

7. Aufbau nach einem der vorstehenden Ansprüche, bei dem der Unterrahmen (3) durch die plattenförmigen Teile gebildete Bodenplatten (70) umfaßt, wobei die die Bodenplatte (70) bildenden plattenförmigen Teile so ausgebildet sind, daß sie eine Breite aufweisen, die dadurch erhalten wird, daß die Seitenkonstruktion in Längsrichtung des Personenwagenaufbaus in mehrere Einheiten unterteilt wird, wobei die plattenförmigen Teile nebeneinandergesetzt werden und ihre Verbindungsmaterialien durch Schweißen miteinander verbunden werden, um die Bodenplatte (7) auszubilden, wobei die Bodenplatten (70) auf Querträgern angeordnet sind und die Oberflächenmaterialien (72) mit großer Lagenstärke durch Schweißen mit den Querträgern (7s) verbunden sind.

8. Eisenbahnpersonenwagenaufbau nach einem der vorstehenden Ansprüche, bei dem die Verbindungsmaterialien langgestreckte Elemente (55, 56; 65, 66) mit kasten- oder kanalförmigem Querschnitt aufweisen, die sich den Rändern der plattenförmigen Teile entlang zwischen deren Oberflächenmaterialien (51, 52; 61, 62) erstrecken und diese von innen halten.

9. Eisenbahnpersonenwagenaufbau nach Anspruch 8, bei dem die Elemente (55, 66) mit kanalförmigem Querschnitt an den Kanten der plattenförmigen Teile nach außen geöffnet sind, um entsprechenden offenen Elementen mit kanalförmigem Querschnitt an benachbarten Plattenteilen gegenüberzustehen und mit diesen verschweißt zu sein.

10. Eisenbahnpersonenwagenaufbau nach Anspruch 8 oder Anspruch 9, bei dem langgestreckte Rahmenteile an der Innenseite der plattenförmigen Teile angeordnet sind und sich in Ausrichtung mit den langgestreckten Verbindungsteilen mit kasten- oder kanalförmigem Querschnitt erstrecken.

11. Verfahren zum Herstellen eines Eisenbahnpersonenwagenaufbaus mit einem Unterrahmen (3), Seitenwandkonstruktionen (2), einer Dachkonstruktion (4) und Abschlußkonstruktionen (5), bei dem Bauteile für mindestens eine der Konstruktionen wie folgt hergestellt werden:
- Bereitstellen mehrerer Tafeln (50a, b), von denen jede über einen Kern (53, 63) aus metallischem Material, der zwischen eine Innenseite- und eine Außenseite-Metallage (51, 52; 61, 62) eingebettet und mit diesen verlötet ist, und ein langgestrecktes Umfangsverbindungselement (55, 56) aus Metall verfügt, das entlang der Kante der Tafel (50a, b) zwischen die Innen- und die Außenseitenlage (51, 52; 61, 62) eingebettet ist, wobei das Verbindungselement (55, 66) einen nach außen offenen Kanalabschnitt aufweist, dessen Steg sich zwischen der Innen- und Außenseitenlage (51, 52; 61, 62) erstreckt und dessen Innen- und Außenschenkel, in Umfangsrichtung ausgerichtet, freiliegende Schweißkanten zum Anschweißen an entsprechende Kanten einer benachbarten Tafel aufweisen, wobei die Innen- und die Außenseitenlage (51, 52; 61, 62) mit dem inneren bzw. äußeren Schenkel verlötet werden und die Schenkel den Schweißkanten überlagert werden;
- nebeneinander Anordnen mehrerer der Tafeln (50a, b) und Verschweißen der Schweißkanten ihrer Verbindungselemente miteinander, um eine Tafeleinheit (X, Y) herzustellen; und
- Herstellen der Bauteile durch nebeneinander Anordnen und Verbinden mehrerer Tafeleinheiten (X, Y).

## Revendications

1. Structure de caisse de voiture de chemin de fer (1) comprenant un châssis (3), deux structures latérales (2), une structure de toit (4) et deux structures d'extrémité (5), et dans laquelle au moins l'un des éléments structurels constituant ladite structure de caisse (1) comporte des éléments en forme de plaques (50a,50b,60a,60b) formés chacun par réunion de deux matériaux de surface (51,52,61,62), un matériau de noyau (53,63) et des matériaux de liaison (55,56,65,66) au moyen d'une liaison métal-sur-métal, et l'un (52,62) des deux matériaux de surface (51,52,61,62) dudit élément en forme de plaque (50a,50b,60a,60b) sur un côté extérieur est plus épais que l'autre (51,61) desdits matériaux de surface sur un côté intérieur.

2. Structure de caisse de voiture de chemin de fer (1) selon la revendication 1, dans laquelle ledit élément en forme de plaque (50a,50b,60a,60b) est agencé de manière à posséder une largeur obtenue en divisant ledit élément structurel en une pluralité d'unités dans la direction longitudinale dudit élément structurel, et une pluralité desdits éléments en forme de plaques (50a,50b,60a,60b) sont juxtaposés et lesdits matériaux de liaison (55,56,65,66) de ces éléments sont réunis par soudage pour constituer ledit élément structurel.

3. Structure de caisse de voiture de chemin de fer (1) selon la revendication 2, dans laquelle un élément d'armature (9,10,19,20) est disposé sur la surface dudit élément en forme de plaque sur le côté intérieur au niveau de la partie de jonction desdits éléments en forme de plaques (50a,50b,60a,60b).

4. Structure selon l'une quelconque des revendications précédentes, dans laquelle lesdites deux structures latérales (2) comprennent lesdits éléments en forme de plaques (50a,50b), chacun desdits éléments en forme de plaques (50a,50b) constituant lesdites structures latérales (2) est agencé de manière à posséder une largeur obtenue en divisant ladite structure latérale (1) dans la direction longitudinale de ladite caisse de voiture, lesdits éléments en forme de plaques (50a,50b) sont juxtaposés et lesdits matériaux de liaison (55,56) de ces éléments sont réunis par soudage pour constituer ladite structure latérale (2), et l'épaisseur dudit matériau de surface de chacun desdits éléments en forme de plaques (50a,50b) constituant ladite structure latérale est plus faible dans une position espacée d'une position d'installation de boggie, que celle dudit matériau de surface dudit élément en forme de plaque à proximité de la position d'installation de boggie de ladite structure latérale.

5. Structure de caisse de voiture de chemin de fer (1) selon la revendication 4, dans laquelle des montants latéraux (9,10) sont disposés sur la surface de chacun desdits éléments en forme de plaques (50a,50b) sur le côté intérieur au niveau de la partie de jonction desdits éléments en forme de plaques (50a,50b).

6. Structure selon l'une quelconque des revendications précédentes, dans laquelle ladite structure de toit (4) comprend lesdits éléments en forme de plaques (60a,60b), lesdits éléments en forme de plaques (60a,60b) constituant ladite structure de toit (4) sont agencés de manière à posséder une largeur obtenue en divisant ladite structure de toit (4) en une pluralité d'unités dans la direction longitudinale de ladite caisse de voiture, lesdits éléments en forme de plaques (60a,60b) sont juxtaposés et lesdits matériaux de liaison (65,66) de ces éléments sont réunis par soudage de manière à constituer ladite structure de toit (4), et des traverses (19,20) sont disposées de manière à correspondre auxdits matériaux de liaison (65,66) au niveau des parties de liaison desdits éléments en forme de plaques (60a,60b).

7. Structure selon l'une quelconque des revendications précédentes, dans laquelle ledit châssis (3) comprend des plaques de plancher (70) constituées par lesdits éléments en forme de plaques, lesdits éléments en forme de plaques constituant ladite plaque de plancher (70) sont constitués de manière à posséder une largeur obtenue en divisant ladite structure latérale en une pluralité d'unités dans la direction longitudinale de ladite caisse de voiture, lesdits éléments en forme de plaques sont juxtaposés et lesdits matériaux de liaison de ces éléments sont réunis par soudage pour constituer ladite plaque de plancher (70), lesdites plaques de plancher (70) sont disposées sur des poutres transversales et lesdits matériaux de surface (72) possédant une grande épaisseur sont réunis par soudage auxdites poutres transversales (7s).

8. Structure de caisse de voiture de chemin de fer selon l'une quelconque des revendications précédentes, dans laquelle les matériaux de liaison comprennent des éléments (55,56;65,66) possédant une section en forme de boîte ou de profilé en U, qui s'étendent le long des périphéries desdits éléments en forme de plaques entre les matériaux de surface (51,52;61,62) de ces éléments et supportent les matériaux de surface à partir de l'intérieur.

9. Structure de caisse de voiture selon la revendication 8, dans laquelle les éléments (55,66) à section en forme de U s'ouvrent vers l'extérieur au niveau des bords des éléments en forme de plaques, de manière à être situés en vis-à-vis d'éléments correspondants à section en forme de U ouvert, situés sur des éléments en forme de plaques voisins, et à y être soudés.

10. Structure de caisse de voiture selon la revendication 8 ou 9, dans laquelle des éléments d'armature allongés sont disposés sur le côté intérieur des éléments en forme de plaque et s'étendent en étant alignés avec les éléments de liaison à section en forme de boîte allongée - ou de profilé en U.

11. Procédé pour fabriquer une structure de caisse de voiture de chemin de fer possédant un châssis (3), des structures de paroi latérale (2), une structure de toit (4) et des structures d'extrémité (5), et dans lequel des éléments structurels pour au moins l'une desdites structures sont réalisés
en utilisant une pluralité de panneaux (50a,b), chaque panneau possédant un matériau de noyau métallique (53,63) enserré et brasé entre des feuilles de surface métalliques intérieure et extérieure (51,52; 61,62) et un élément de liaison métallique périphérique allongé (55,66) enserré entre les feuilles de surface intérieure et extérieure (51,52;61,62) le long du bord du panneau (50a,b), l'élément de liaison (55,66) possédant une section en forme de profil en U ouvert en direction de l'extérieur et dont une base franchit l'espace entre les feuilles de surface intérieure et extérieure (51,52;61,62) et des branches intérieure et extérieure possèdent des bords de soudage exposés directement au niveau de la périphérie et permettant le soudage à des bords correspondants d'un panneau adjacent, les feuilles de surface intérieure et extérieure (51,52;61,62) étant fixées par brasage respectivement sur les branches intérieure et extérieure et chevauchant ces dernières jusqu'à leurs bords de soudage;
en juxtaposant une pluralité desdits panneaux (50a,b) et en soudant entre eux les bords de soudage de leurs éléments de liaison pour former une unité de panneau (X,Y), et
en formant les éléments structurels en juxtaposant et en réunissant une pluralité d'unités de panneaux (X,Y).
